# EUROPÄISCHE PATENTSCHRIFT

(11) **EP 2 502 784 B1**
(45) Veröffentlichungstag und Bekanntmachung des Hinweises auf die Patenterteilung: **26.06.2019**
(21) Anmeldenummer: 12001791.8
(22) Anmeldetag: 16.03.2012
(51) Int. Cl.: B60Q 3/64, B60Q 3/66, G02B 6/00, F21S 43/245, F21S 43/247, F21S 43/249, F21V 8/00, F21Y 101/00

(54) **Fahrzeugleuchte, insbesondere zur Beleuchtung des Innenraums des Fahrzeugs**
Vehicle light, in particular for lighting the interior of a vehicle
Lampe de véhicule, en particulier pour éclairer l'intérieur du véhicule

(30) Priorität: 24.03.2011 DE 102011014919
(43) Veröffentlichungstag der Anmeldung: 26.09.2012
(73) Patentinhaber: Volkswagen Aktiengesellschaft, 38440 Wolfsburg (DE)
(72) Erfinder: Kiel, Henning, 38444 Wolfsburg (DE); Richter, Beatrice, 38120 Braunschweig (DE); Studeny, Christian, 38440 Wolfsburg (DE)

(56) Entgegenhaltungen:
- EP-A2- 2 071 228
- DE-U1- 20 312 518
- JP-A- 2006 236 588

## Beschreibung

Die vorliegende Erfindung betrifft eine Fahrzeugleuchte, insbesondere zur Beleuchtung des Innenraums des Fahrzeugs. Die Fahrzeugleuchte umfasst zumindest zwei Lichtquellen und einen Lichtleitkörper, der zumindest eine erste Lichteinkoppelfläche zur Einkoppelung der Lichtemission der ersten Lichtquelle, eine zweite Lichteinkoppelfläche zur Einkoppelung der Lichtemission der zweiten Lichtquelle und eine Vielzahl von Lichtauskoppelstrukturen aufweist, bei denen das eingekoppelte Licht reflektiert wird, um bei einer Lichtauskoppelfläche aus dem Lichtleitkörper auszutreten. Des Weiteren umfasst die Fahrzeugleuchte zumindest eine Lichtquelle und einem Lichtleitkörper, der zumindest eine erste Lichteinkoppelfläche zur Einkoppelung der Lichtemission der mindestens einen Lichtquelle, eine zweite Lichteinkoppelfläche zur Einkoppelung der Lichtemission der mindestens einen Lichtquelle und eine Vielzahl von Lichtauskoppelstrukturen aufweist, bei denen das eingekoppelte Licht reflektiert wird, um bei einer Lichtauskoppelfläche aus dem Lichtleitkörper auszutreten.

Aus der DE 10 2008 034 052 A1 ist ein Lichtleitkörper bekannt, der insbesondere bei einem Positionslicht oder Tagfahrlicht eines Kraftfahrzeugs eingesetzt werden kann. Mittels des Lichtleitkörpers soll über der Länge des Lichtleitkörpers eine homogene und farbverschiebungsfreie Lichtauskoppelung ermöglicht werden. Zur Einspeisung des Lichts in den Lichtleitkörper sind bei gegenüberliegenden Endflächen des Lichtleitkörpers zwei Lichtquellen vorgesehen, deren Lichtemission eingekoppelt wird. Auf einer Fläche des Lichtleitkörpers sind Prismen zur Lichtauskoppelung über eine gegenüberliegende Lichtauskoppelfläche vorgesehen. Der Lichtleitkörper dient zur Aussendung von Licht in Fahrtrichtung, wobei insgesamt eine homogene Lichtverteilung über der gesamten Länge des Lichtleiters erreicht werden soll, unabhängig davon, ob Licht der ersten oder zweiten Lichtquelle ausgekoppelt wird.

Ferner beschreibt die DE 10 2005 019 018 A1 eine Leuchte mit einem Lichtleiter und mehreren Lichtquellen, wobei der Lichtleiter voneinander beabstandete Lichteintrittsflächen für von den Lichtquellen ausgestrahltes Licht aufweist. Gegenüberliegend der Lichteintrittsflächen sind jeweils Lichtaustrittsflächen angeordnet, die jeweils in unterschiedliche Richtungen weisen. Bei den Lichtaustrittsflächen tritt das Licht durch die Fläche durch und aus dem Lichtleiter aus. Die Lichtquellen sind als Leuchtdioden ausgebildet, wobei die Leuchtdioden, welche der einen Lichteintrittsfläche zugeordnet sind, weißes Licht emittieren und die Leuchtdioden, welche der anderen Lichteintrittsfläche zugeordnet sind, gelbes Licht emittieren. Auf diese Weise wird erreicht, dass von der Leuchte in einer Richtung weißes Licht abgestrahlt wird und in einer anderen Richtung gelbes Licht.

Ferner offenbart die EP 2 071 228 A2 eine Fahrzeugleuchte, welche zwei Lichtquellen, ein Lichtleitelement sowie optische Komponenten umfasst, wobei das Lichtleitelement einen funktionalen Abschnitt zur Emission diffusen Lichtes sowie einen dekorativen Abschnitt aufweist, welcher eine reflektierende Oberfläche umfasst, welche Licht der zweiten Lichtquelle reflektiert.

Bei Fahrzeugen ist der Bauraum sowohl für die Außenleuchten, als auch für die Leuchten, welche Licht in den Innenraum des Fahrzeugs emittieren, sehr begrenzt. Es besteht daher ein Bedürfnis, Fahrzeugleuchten zu schaffen, deren Bauraumbedarf so gering wie möglich ist. Ferner ist es von Vorteil, wenn verschiedene Funktionen der Fahrzeugleuchten in einer Leuchte zusammengefasst werden können.

Es ist daher die Aufgabe der vorliegenden Erfindung, eine Fahrzeugleuchte bereitzustellen, deren Bauraumbedarf gering ist und die verschiedenen Lichtfunktionen bereitstellen kann.

Erfindungsgemäß wird diese Aufgabe durch einen Fahrzeugleuchte mit den Merkmalen des Anspruchs 1 oder 2 gelöst. Bevorzugte Weiterbildungen und Ausgestaltungen ergeben sich aus den abhängigen Ansprüchen.

Die erfindungsgemäße Fahrzeugleuchte ist dadurch gekennzeichnet, dass jede Lichtauskoppelstruktur einen ersten Bereich aufweist, auf den bei eingeschalteter erster Lichtquelle ein Teil der Lichtemission dieser ersten Lichtquelle trifft, und einen zweiten Bereich aufweist, auf den bei eingeschalteter zweiter Lichtquelle ein Teil der Lichtemission dieser zweiten Lichtquelle trifft. Dabei weist die mittels des ersten Bereichs erzeugte Lichtauskoppelung eine andere Abstrahlcharakteristik auf, als die mittels des zweiten Bereichs erzeugte Lichtauskoppelung.

Die erfindungsgemäße Fahrzeugleuchte ist ferner dadurch gekennzeichnet, dass jede Lichtauskoppelstruktur einen ersten Bereich aufweist, auf den ein Teil der Lichtemission des über die erste Lichteinkoppelfläche in den Lichtleitkörper eingekoppelten Lichts trifft, und einen zweiten Bereich aufweist, auf den ein Teil der Lichtemission des über die zweite Lichteinkoppelfläche in den Lichtleitkörper eingekoppelten Lichts trifft, und dass die mittels des ersten Bereichs erzeugte Lichtauskoppelung eine andere Abstrahlcharakteristik aufweist, als die mittels des zweiten Bereichs erzeugte Lichtauskoppelung.

Die erfindungsgemäße Fahrzeugleuchte besitzt den Vorteil, dass sie einen sehr geringen Bauraumbedarf hat, wobei gleichzeitig zwei verschiedene Lichtfunktionen bereitgestellt werden können. Da jede einzelne Lichtauskoppelstruktur der Vielzahl von Lichtauskoppelstrukturen eine Lichtauskoppelung mit unterschiedlichen Abstrahlcharakteristiken bewirkt, kann eine Mehrfachfunktion über die gesamte Auskoppelfläche des Lichtleitkörpers bereitgestellt werden. Der Lichtleitkörper ist somit nicht in verschiedene Bereiche unterteilt, die unterschiedliche Abstrahlcharakteristiken bereitstellen. Es werden vielmehr beide Abstrahlcharakteristiken von dem gesamten Lichtleitkörper bereitgestellt. Hierdurch kann die nutzbare Fläche des Lichtleitkörpers erhöht werden, wodurch andererseits der Bauraumbedarf verringert wird.

Unter einem Lichtleitkörper im Sinne der vorliegenden Erfindung wird ein Körper verstanden, in welchem ein über die Lichteinkoppelfläche eintretender Lichtstrahl zumindest einmal durch Totalreflexion reflektiert wird. Bei dem Lichtleitkörper kann es sich somit beispielsweise um einen Lichtleiter handeln, welcher zwei Lichteinkoppelflächen, z.B. bei gegenüberliegenden Stirnflächen, aufweist.

Die Anordnung der Lichteinkoppelflächen, der zugeordneten Lichtquellen sowie der beiden Bereiche der Lichtauskoppelstrukturen sind insbesondere so gewählt, dass auf den ersten Bereich nur von der ersten Lichtquelle emittierte Lichtstrahlen treffen und auf den zweiten Bereich nur von der zweiten Lichtquelle emittierte Lichtstrahlen treffen. Auf diese Weise kann eine sehr selektive Lichtauskoppelung erzeugt werden, bei welcher der erste Bereich nur die Abstrahlcharakteristik des Lichts beeinflusst, welches von der ersten Lichtquelle eingekoppelt wurde, und der zweite Bereich nur die Abstrahlcharakteristik des Lichts beeinflusst, welches ursprünglich von der zweiten Lichtquelle eingekoppelt wurde.

Die Auskoppelfläche des Lichtleitkörpers ist insbesondere gegenüberliegend zu den Lichtauskoppelstrukturen angeordnet. Hierdurch erreicht man vorteilhafterweise, dass die für die Lichtauskoppelung verantwortlichen Strukturen für den Betrachter nicht direkt sichtbar sind. Es kann vielmehr eine glatte Auskoppelfläche bereitgestellt werden, über welche jedoch Licht verschiedener Abstrahlcharakteristiken ausgekoppelt wird.

Gemäß einer Ausgestaltung der erfindungsgemäßen Fahrzeugleuchte ist die Lichtauskoppelstruktur ein Einschnitt oder eine Kerbe. Der Lichtleitkörper weist somit eine Vielzahl von Einschnitten oder Kerben auf. Hierdurch erreicht man, dass der Lichtleitkörper sehr einfach und kostengünstig gefertigt werden kann. Alternativ kann die Lichtauskoppelstruktur auch von einem Vorsprung oder einer Hervorhebung gebildet sein.

Gemäß einer Ausgestaltung der erfindungsgemäßen Fahrzeugleuchte sind die beiden Bereiche der Lichtauskoppelstruktur zwei Flächen, die einen Winkel einschließen. Dabei kann eine der Flächen eben sein. Eine andere Fläche kann gekrümmt sein. Auf diese Weise kann man auf einfache und kostengünstige Weise die unterschiedliche Abstrahlcharakteristik erzeugen.

Gemäß einer weiteren Ausgestaltung der erfindungsgemäßen Fahrzeugleuchte ist die von dem ersten Bereich erzeugte Abstrahlcharakteristik ein gerichtetes Lichtbündel. Das Lichtbündel kann beispielsweise einen Öffnungswinkel von kleiner als 15°, insbesondere kleiner als 10° und bevorzugt kleiner als 5° aufweisen. Hierdurch kann vorteilhafterweise ein Leselicht im Innenraum des Fahrzeugs bereitgestellt werden.

Gemäß einer weiteren Ausgestaltung der erfindungsgemäßen Fahrzeugleuchte ist die von dem zweiten Bereich erzeugte Abstrahlcharakteristik eine diffuse Lichtemission. Hierfür kann beispielsweise die dem zweiten Bereich zugeordnete Fläche der Lichtauskoppelstruktur eine raue Oberfläche besitzen. Durch die diffuse Lichtemission kann vorteilhafterweise ein großer Bereich des Innenraums des Fahrzeugs ausgeleuchtet werden. Ferner kann eine sogenannte Ambientebeleuchtung bereitgestellt werden.

Unter einer diffusen Lichtabstrahlung wird im Sinne der Erfindung verstanden, dass die Lichtemission nicht gerichtet ist, sondern aufgrund einer Vielzahl von Streuzentren in eine Vielzahl von unterschiedlichen Richtungen erfolgt. Anders als bei Linsenelementen, die parallele, konvergierende oder divergierende Lichtbündel erzeugen, d.h. eine gerichtete Lichtemission, ist die Lichtemission bei der diffusen Lichtabstrahlung nicht gerichtet. Beispielsweise kann ein parallel auftreffendes Lichtbündel gemäß dem Lambertschen Gesetz reflektiert werden oder eine Großwinkelstreuung erzeugt werden.

Alternativ kann von dem zweiten Bereich auch eine Abstrahlcharakteristik mit einem stark divergenten Lichtbündel erzeugt werden. Der Öffnungswinkel der Lichtemission kann beispielsweise größer als 50°, insbesondere größer als 60° sein.

Der Lichtleitkörper kann plattenförmig, stabförmig oder scheibenförmig sein. Auf diese Weise lässt sich die Fahrzeugleuchte flexibel an verschiedene Einbausituationen insbesondere im Innenraum des Fahrzeugs anpassen.

Die Erfindung wird nun anhand von Ausführungsbeispielen mit Bezug zu den Zeichnungen erläutert.
- Figur 1: zeigt schematisch ein Fahrzeug mit einem Ausführungsbeispiel der erfindungsgemäßen Fahrzeugleuchte,
- Figur 2: zeigt einen Schnitt durch ein Ausführungsbeispiel der erfindungsgemäßen Fahrzeugleuchte mit dem Strahlengang einer ersten Lichtquelle,
- Figur 3: zeigt einen Schnitt durch das Ausführungsbeispiel der erfindungsgemäßen Fahrzeugleuchte mit dem Strahlengang einer zweiten Lichtquelle,
- Figur 4: zeigt eine Detailansicht der Figur 2,
- Figur 5: zeigt ein Beispiel eines Lichtleitkörpers eines Ausführungsbeispiels der erfindungsgemäßen Fahrzeugleuchte,
- Figur 6: zeigt ein anderes Beispiel eines Lichtleitkörpers eines Ausführungsbeispiels der erfindungsgemäßen Fahrzeugleuchte
- Figuren 7a, 7b: zeigen ein anderes Beispiel einer Lichteinkopplung in einen Lichtleitkörper eines Ausführungsbeispiels der erfindungsgemäßen Fahrzeugleuchte und
- Figuren 8a, 8b: zeigen ein weiteres Beispiel einer Lichteinkopplung in einen Lichtleitkörper eines Ausführungsbeispiels der erfindungsgemäßen Fahrzeugleuchte.

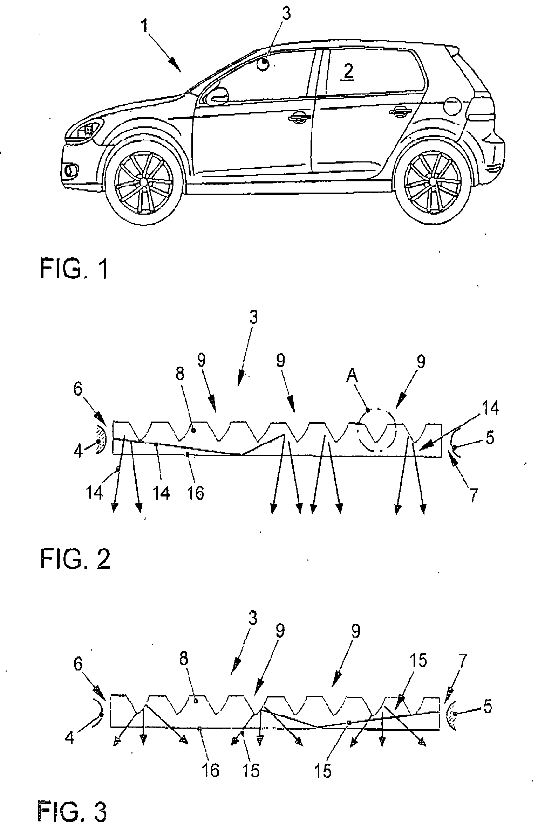

In Figur 1 ist ein Fahrzeug 1 dargestellt, bei welchem ein Ausführungsbeispiel der erfindungsgemäßen Fahrzeugleuchte 3 im Bereich der Decke bzw. des Dachhimmels im Innenraum 2 des Fahrzeugs 1 angeordnet ist. Die Leuchte 3 stellt dort zum einen eine Leseleuchte und zum anderen eine allgemeine Beleuchtung des Innenraums 2 des Fahrzeugs 1 bereit.

Wie in den Figuren 2 und 3 gezeigt, umfasst die Fahrzeugleuchte zwei Lichtquellen 4 und 5: In Figur 2 ist der Fall dargestellt, bei dem die Lichtquelle 4 eingeschaltet ist, in Figur 3 ist der Fall dargestellt, bei dem die gegenüberliegend angeordnete Lichtquelle 5 eingeschaltet ist. Die Fahrzeugleuchte 3 umfasst einen Lichtleitkörper 8 mit einer ersten Lichteinkoppelfläche 6, bei welcher die Lichtemission der Lichtquelle 4 eingekoppelt wird, und eine zweite Lichteinkoppelfläche 7, bei welcher die Lichtemission der Lichtquelle 5 eingekoppelt wird. Die Lichteinkoppelflächen 6 und 7 sind auf abgewandten Enden des Lichtleitkörpers 8 angeordnet. Das über die beiden Lichteinkoppelflächen 6 und 7 eingekoppelte Licht der Lichtquellen 4 und 5 wird in dem Lichtleitkörper 8 durch Totalreflexion geleitet, sodass es sich in dem gesamten Lichtleitkörper 8 verteilt.

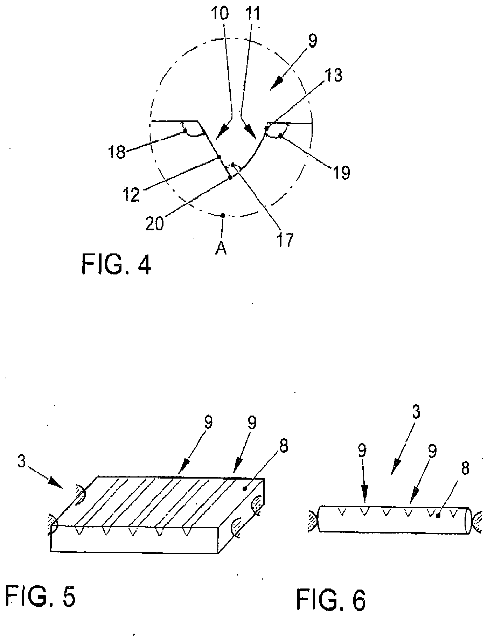

Zur Auskoppelung des Lichts in dem Lichtleitkörper 8 ist eine Vielzahl von Lichtauskoppelstrukturen 9 vorgesehen. Eine Lichtauskoppelstruktur 9 ist in der Detailansicht A der Figur 4 dargestellt. Die Lichtauskoppelstruktur 9 ist in diesem Fall von einem Einschnitt bzw. einer Kerbe gebildet. Die Kerbe weist einen ersten Bereich 10 auf, auf den nur Licht auftritt, das ursprünglich von der Lichtquelle 4 emittiert wurde. Ferner weist die Kerbe einen zweiten Bereich 11 auf, auf den nur Licht trifft, welches von der Lichtquelle 5 emittiert wurde. Der Lichtweg 14 der von der Lichtquelle 4 emittierten Lichtstrahlen, die über die erste Lichteinkoppelfläche 6 in den Lichtleitkörper 8 eingekoppelt werden und die auf den ersten Bereich 10 der Lichtauskoppelstrukturen 9 auftreffen, ist in Figur 2 gezeigt. Der Lichtweg 15 der von der Lichtquelle 5 emittierten Lichtstrahlen, die über die zweite Lichteinkoppelfläche 7 in den Lichtleitkörper 8 eingekoppelt werden und die auf den zweiten Bereich 11 der Lichtauskoppelstrukturen 9 auftreffen, ist in Figur 3 gezeigt.

Bei dem ersten Bereich 10 der Lichtauskoppelstrukturen 9 ist eine ebene Fläche gebildet, welche den Winkel 18 mit einer Oberfläche des Lichtleitkörpers 8 einschließt. Bei dieser Fläche 12 werden die auftreffenden Lichtstrahlen reflektiert. Hierfür kann die Fläche 12 ggf. mit einer entsprechenden Beschichtung versehen sein. Nach der Reflektion an der Fläche 12 gelangen die Lichtstrahlen zu der gegenüberliegenden Auskoppelfläche 16 des Lichtleitkörpers 8, bei welcher sie aus dem Lichtleitkörper 8 austreten.

Bei dem zweiten Bereich 11 der Lichtauskoppelstrukturen 9 ist auch eine Fläche 13 gebildet, die jedoch gekrümmt ist. Sie schließt einen Winkel 19 mit der Oberfläche des Lichtleitkörpers 8 ein. Bei den Winkeln 18 und 19 handelt es sich insbesondere um stumpfe Winkel. Die gekrümmte Fläche 13 trifft bei einer Verbindungslinie 20 auf das Ende der ebenen Fläche 12. Die beiden Flächen schließen den spitzen Winkel 17 ein. Das auf die Fläche 13 vom Inneren des Lichtleitkörpers 8 auftreffende Licht wird auch reflektiert. Hierzu kann auch die Fläche 13 mit einer entsprechenden Beschichtung versehen sein. Nach der Reflexion an der Fläche 13 tritt das Licht bei der gegenüberliegenden Lichtauskoppelfläche 16 aus dem Lichtleitkörper 8 aus.

Die Fläche 12 ist relativ zu der ersten Lichteinkoppelfläche 6 und der Lichtquelle 4 so angeordnet und ausgerichtet, dass die Abstrahlcharakteristik des bei dieser Fläche 12 reflektierten Lichts beim Austritt aus der Auskoppelfläche 16 einen sehr kleinen Öffnungswinkel besitzt, der z.B. in einem Bereich zwischen 15° und 5° liegt. Es wird somit ein Spot bereitgestellt, welcher als Leselicht dient.

Im Gegensatz hierzu ist die Anordnung und Krümmung der Fläche 13 relativ zu der zweiten Lichteinkoppelfläche 7 und der Lichtquelle 5 so ausgebildet und angeordnet, dass eine andere Abstrahlcharakteristik erzeugt wird, nämlich eine Lichtemission mit einem sehr großen Öffnungswinkel. Der Öffnungswinkel ist insbesondere größer als 50°, bevorzugt größer als 60°. Die verschiedenen Abstrahlcharakteristiken sind in den Figuren 2 und 3 gezeigt. Des Weiteren kann die Fläche 13 rau ausgebildet sein, sodass eine Vielzahl von Streuzentren bereitgestellt wird, sodass bei der Reflektion an dieser Fläche 13 eine diffuse Abstrahlcharakteristik erzeugt wird. Es wird somit insbesondere keine gerichtete Lichtemission erzeugt.

Bei den Lichtquellen 4 und 5 der erfindungsgemäßen Fahrzeugleuchte handelt es sich insbesondere um lichtemittierende Dioden. Die Verwendung von lichtemittierenden Dioden hat den Vorteil, dass diese Lichtquellen einen sehr geringen Bauraumbedarf und eine hohe Lebensdauer haben.

Die Lichtquellen 4 und 5 können getrennt beispielsweise über einen Kippschalter angesteuert werden, sodass nur eine der beiden Lichtquellen 4 und 5 eingeschaltet ist oder beide Lichtquellen 4 und 5 gemeinsam eingeschaltet sind. Dabei ergibt sich, dass auch wenn nur eine der Lichtquellen 4 und 5 eingeschaltet ist, jeweils die gesamte Auskoppelfläche 16 für die Lichtabstrahlung der Fahrzeugleuchte genutzt wird. Wenn beide Lichtquellen 4, 5 eingeschaltet sind, wird die Auskoppelfläche 16 gemeinsam für die beiden Lichtemissionen mit den verschiedenen Abstrahlcharakteristiken genutzt. Jede Auskoppelstruktur 9 kann somit zu einer Lichtauskoppelung der Lichtemission der Lichtquelle 4 und der Lichtemission der Lichtquelle 5 beitragen.

Der Lichtleitkörper 8 kann verschiedene Formen haben. Er kann plattenförmig, stabförmig oder scheibenförmig sein. In Figur 5 ist ein länglicher plattenförmiger Lichtleitkörper 8 gezeigt, bei dem über zwei abgewandte Stirnflächen jeweils Licht zweier Lichtquellen eingekoppelt wird. Die Lichtauskoppelstrukturen 9 sind in diesem Fall von länglichen Kerben gebildet, die sich parallel zu den Lichteinkoppelflächen erstrecken.

In Figur 6 ist ein stabförmiger Lichtleitkörper 8 gezeigt, bei dem auf abgewandten Stirnflächen jeweils das Licht einer Lichtquelle eingekoppelt wird. Die Lichtauskoppelstrukturen 9 sind in diesem Fall auch Kerben, die parallel zu den Lichteinkoppelflächen ausgerichtet sind.

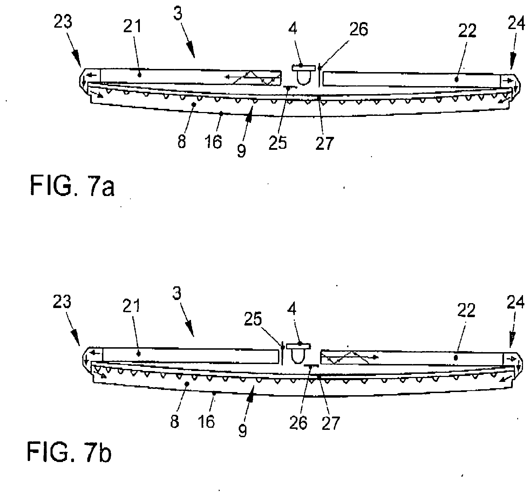

Gemäß einem weiteren in den Figuren 7a, 7b gezeigten Ausführungsbeispiel erfolgt die Erzeugung der beiden verschiedene Abstrahlcharakteristiken aufweisenden Lichtfunktionen mittels einer Lichtquelle 4. Die Zuführung des durch die Lichtquelle 4 emittierten Lichts zu dem Lichtleitkörper 8 erfolgt durch einen ersten bzw. zweiten Lichtleiter 21, 22, d.h. das von der Lichtquelle 4 emittierte Licht wird entweder in den ersten Lichtleiter 21 oder in den zweiten Lichtleiter 22 eingekoppelt und anschließend über einen ersten bzw. einen zweiten Abschnitt 23, 24 zu den Lichteinkoppelflächen des Lichtleitkörpers 8 geleitet. Bevorzugt wird das von der Lichtquelle 4 emittierte Licht entweder gemäß Fig. 7a dem ersten Lichtleiter 21 oder gemäß Fig. 7b dem zweiten Lichtleiter 22 zugeführt. Hierzu weist die Fahrzeugleuchte 3 eine erste Blende 25 und eine zweite Blende 26 auf, die derart bewegbar angeordnet sind, dass sie die Lichteinkopplung in den ersten bzw. zweiten Lichtleiter 21, 22 ermöglichen oder blockieren. Abhängig davon welche Abstrahlcharakteristik erzeugt werden soll, befindet sich eine der Blenden 25, 26 in der lichtdurchlassenden Stellung und die andere Blende 25, 26 in der den Lichtdurchlass sperrenden Position. In dem in Fig. 7a gezeigten Bespiel befindet sich die erste Blende 25 in der lichtdurchlassenden Stellung, so dass das von der Lichtquelle 4 emittierte Licht in den ersten Lichtleiter 21 und anschließend in den Lichtleitkörper 8 eingekoppelt wird. Die zweite Blende 26 befindet sich in der den Lichtdurchlass sperrenden Position, so dass die zweite Blende 26 die Stirnfläche bzw. die Lichteinkoppelfläche des zweiten Lichtleiters 22 abdeckt. Hierdurch wird das von der Lichtquelle 4 emittierte Licht nicht in den zweiten Lichtleiter 22 eingekoppelt. Gemäß Fig. 7b erfolgt die Lichteinkopplung in den zweiten Lichtleiter 22 und die Lichteinkopplung in den ersten Lichtleiter 21 ist blockiert.

Oberhalb des Lichtleitkörpers 8 ist ein Maskierelement 27 angeordnet, so dass die Blenden 25, 26, die Lichtquelle 4 und die Lichtleiter 21, 22 vom Fahrzeuginnenraum her nicht sichtbar bzw. verdeckt durch das Maskierelement 27 angeordnet sind.

Alternativ ist es auch denkbar, dass sich beide Blenden 25, 26 in der lichtdurchlassenden Stellung befinden. Somit wird die Auskoppelfläche 16 gemeinsam für die beiden Lichtemissionen mit den verschiedenen Abstrahlcharakteristiken genutzt.

Anstatt der Verwendung der ersten und zweiten Blende 25, 26 ist es auch denkbar, die Lichtquelle 4 derart zu schwenken, dass das von ihr emittierte Licht entweder in den ersten Lichtleiter 21 oder in den zweiten Lichtleiter 22 eingekoppelt wird.

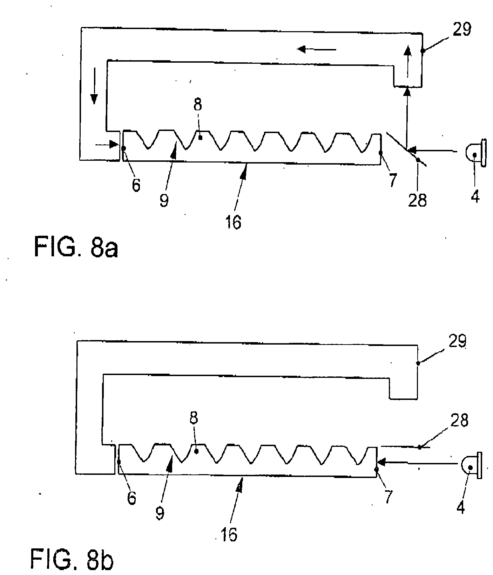

In den Fig. 8a, 8b ist eine weitere Variante der Zuführung des durch die Lichtquelle 4 emittierten Lichts zu dem Lichtleitkörper 8 gezeigt. Hierbei ist ein Lichtumlenkelement 28 zwischen der Lichtquelle 4 und dem Lichtleitkörper 8 angeordnet. Bei dem Lichtumlenkelement 28 handelt es sich bevorzugt um einen Spiegel oder einen Reflektor. Zur Erzeugung der in der Fig. 2 gezeigten Lichtabstrahlcharakteristik wird gemäß Fig. 8a das Lichtumlenkelement 28 in eine Position bewegt, so dass das von der Lichtquelle 4 emittierte Licht an dem Lichtumlenkelement 28 reflektiert und zu einem Lichtleiter 29 geleitet wird. Das Licht wird dann an der ersten Lichteinkoppelfläche 6 durch den Lichtleiter 29 in den Lichtleitkörper 8 eingespeist. In dieser Position des Lichtumlenkelementes 28 gelangt kein Licht zu der zweiten Lichteinkoppelfläche 7 des Lichtleitkörpers 8.

Gemäß Fig. 8b ist das Lichtumlenkelement 28 derart angeordnet, dass das von der Lichtquelle 4 emittierte Licht in die zweite Lichteinkoppelfläche 7 des Lichtleitkörpers 8 eingekoppelt wird. Hierdurch wird die in der Fig. 3 gezeigte Lichtabstrahlcharakteristik erzeugt. Das von der Lichtquelle 4 emittierte Licht gelangt in dieser Position des Lichtumlenkelementes 28 nicht zum Lichtleiter 29.

Bei den Lichtquellen 4, 5, 6 kann es sich um einzelne Lichtquellen, beispielsweise einzelne lichtemittierenden Dioden handeln. Unter einer Lichtquelle im Sinne der Erfindung wird auch die Zusammenschaltung mehrerer einzelner lichtemittierender Elemente, beispielsweise lichtemittierender Dioden, zu einem Array bzw. einer Matrix verstanden. Insbesondere sind die mehreren lichtemittierenden Elemente auf einem gemeinsamen Chip bzw. einer gemeinsamen Leiterplatine angeordnet.

### Bezugszeichenliste

- 1: Fahrzeug
- 2: Innenraum des Fahrzeugs
- 3: Fahrzeugleuchte
- 4: Lichtquelle
- 5: Lichtquelle
- 6: erste Lichteinkoppelfläche
- 7: zweite Lichteinkoppelfläche
- 8: Lichtleitkörper
- 9: Lichtauskoppelstrukturen
- 10: erster Bereich
- 11: zweiter Bereich
- 12: Fläche
- 13: Fläche
- 14: Lichtweg
- 15: Lichtweg
- 16: Auskoppelfläche
- 17: Winkel
- 18: Winkel
- 19: Winkel
- 20: Verbindungslinie
- 21: erster Lichtleiter
- 22: zweiter Lichtleiter
- 23: erster Abschnitt
- 24: zweiter Abschnitt
- 25: erste Blende
- 26: zweite Blende
- 27: Maskierelement
- 28: Lichtumlenkelement
- 29: dritter Lichtleiter

## Patentansprüche

1. Fahrzeugleuchte (3), insbesondere zur Beleuchtung des Innenraums (2) des Fahrzeugs (1), mit
- zumindest zwei Lichtquellen (4,5) und
- einem Lichtleitkörper (8), der zumindest eine erste Lichteinkoppelfläche (6) zur Einkoppelung der Lichtemission der ersten Lichtquelle (4), eine zweite Lichteinkoppelfläche (7) zur Einkoppelung der Lichtemission der zweiten Lichtquelle (5) und eine Vielzahl von Lichtauskoppelstrukturen (9) aufweist, bei denen das eingekoppelte Licht reflektiert wird, um bei einer Lichtauskoppelfläche (16) aus dem Lichtleitkörper (8) auszutreten,
**dadurch gekennzeichnet,**
- **dass** jede Lichtauskoppelstruktur (9) einen ersten Bereich (10) aufweist, auf den bei eingeschalteter erster Lichtquelle (4) ein Teil der Lichtemission dieser ersten Lichtquelle (4) trifft, und einen zweiten Bereich (11) aufweist, auf den bei eingeschalteter zweiter Lichtquelle (5) ein Teil der Lichtemission dieser zweiten Lichtquelle (5) trifft, und
- **dass** die mittels des ersten Bereichs (10) erzeugte Lichtauskoppelung eine andere Abstrahlcharakteristik aufweist, als die mittels des zweiten Bereichs (11) erzeugte Lichtauskoppelung.

2. Fahrzeugleuchte (3), insbesondere zur Beleuchtung des Innenraums (2) des Fahrzeugs (1), mit
- zumindest einer Lichtquelle (4) und
- einem Lichtleitkörper (8), der zumindest eine erste Lichteinkoppelfläche (6) zur Einkoppelung der Lichtemission der mindestens einen Lichtquelle (4), eine zweite Lichteinkoppelfläche (7) zur Einkoppelung der Lichtemission der mindestens einen Lichtquelle (4) und eine Vielzahl von Lichtauskoppelstrukturen (9) aufweist, bei denen das eingekoppelte Licht reflektiert wird, um bei einer Lichtauskoppelfläche (16) aus dem Lichtleitkörper (8) auszutreten,
**dadurch gekennzeichnet,**
- **dass** jede Lichtauskoppelstruktur (9) einen ersten Bereich (10) aufweist, auf den ein Teil der Lichtemission des über die erste Lichteinkoppelfläche (6) in den Lichtleitkörper (8) eingekoppelten Lichts trifft, und einen zweiten Bereich (11) aufweist, auf den ein Teil der Lichtemission des über die zweite Lichteinkoppelfläche (7) in den Lichtleitkörper (8) eingekoppelten Lichts trifft, und
- **dass** die mittels des ersten Bereichs (10) erzeugte Lichtauskoppelung eine andere Abstrahlcharakteristik aufweist, als die mittels des zweiten Bereichs (11) erzeugte Lichtauskoppelung.

3. Fahrzeugleuchte (3) nach Anspruch 1 oder 2,
**dadurch gekennzeichnet,**
**dass** die Lichtauskoppelstruktur (9) ein Einschnitt oder eine Kerbe ist.

4. Fahrzeugleuchte (3) nach einem der vorhergehenden Ansprüche,
**dadurch gekennzeichnet,**
**dass** die beiden Bereiche (10,11) der Lichtauskoppelstruktur (9) zwei Flächen (12, 13) sind, die einen Winkel (17) einschließen.

5. Fahrzeugleuchte (3) nach Anspruch 4,
**dadurch gekennzeichnet,**
**dass** zumindest eine der Flächen (12) eben ist.

6. Fahrzeugleuchte (3) nach Anspruch 4 oder 5,
**dadurch gekennzeichnet,**
**dass** zumindest eine der Flächen (13) gekrümmt ist.

7. Fahrzeugleuchte (3) nach einem der vorhergehenden Ansprüche,
**dadurch gekennzeichnet,**
**dass** die von dem ersten Bereich (10) erzeugte Abstrahlcharakteristik ein gerichtetes Lichtbündel ist.

8. Fahrzeugleuchte (3) nach einem der vorhergehenden Ansprüche,
**dadurch gekennzeichnet,**
**dass** die von dem zweiten Bereich (11) erzeugte Abstrahlcharakteristik eine diffuse Lichtemission ist.

9. Fahrzeugleuchte (3) nach einem der Ansprüche 4 bis 8,
**dadurch gekennzeichnet,**
**dass** zumindest eine der Flächen (13) eine raue Oberfläche besitzt.

10. Fahrzeugleuchte (3) nach einem der vorhergehenden Ansprüche,
**dadurch gekennzeichnet,**
**dass** der Lichtleitkörper (8) plattenförmig, stabförmig oder scheibenförmig ist.

## Claims

1. Vehicle light (3), in particular for illuminating the interior (2) of the vehicle(1), with
- at least two light sources (4, 5) and
- a light guide body (8), which comprises at least one first light coupling-in surface (6) for coupling in the light emission of the first light source (4), a second light coupling-in surface (7) for coupling in the light emission of the second light source (5), and a plurality of light coupling-out structures (9), wherein the coupled-in light is reflected to exit the light guide body (8) at a light coupling-out surface (16),
**characterized in that**
- each light coupling-out structure (9) comprises a first region (10) on which, when the first light source (4) is switched on, a part of the light emission of this first light source (4) impinges, and comprises a second region (11) on which, when the second light source (5) is switched on, a part of the light emission of this second light source (5) impinges, and
- wherein the coupled-out light generated by means of the first region (10) has a different emission characteristic than the coupled-out light generated by means of the second region (11).

2. Vehicle light (3), in particular for illuminating the interior (2) of the vehicle (1), with
- at least one light source (4) and,
- a light guide body (8) comprising at least a first light coupling-in surface (6) for coupling in the light emission of the at least one light source (4), a second light coupling-in surface (7) for coupling in the light emission of the at least one light source (4), and a plurality of light coupling-out structures (9), wherein the coupled-in light is reflected to exit the light guide body (8) at a light coupling-out surface (16),
**characterized in that**
- each light coupling-out structure (9) comprises a first region (10), on which a part of the light emission coupled into the light guide body (8) via the first light coupling-in surface (6) impinges, and also comprises a second region (11), on which a part of the light emission coupled into the light guide body (8) via the second light coupling-in surface (7) impinges, and
- the coupled-out light generated by means of the first region (10) has a different emission characteristic than the coupled-out light generated by means of the second region (11).

3. Vehicle light (3) according to claim 1 or 2, **characterized in that** the light coupling-out structure (9) is an incision or a notch.

4. Vehicle light (3) according to any one of the preceding claims, **characterized in that** the two regions (10, 11) of the light coupling-out structure (9) are two surfaces (12, 13) which enclose an angle (17).

5. Vehicle light (3) according to claim 4, **characterized in that** at least one of the surfaces (12) is flat.

6. Vehicle light (3) according to claim 4 or 5, **characterized in that** at least one of the surfaces (13) is curved.

7. Vehicle light (3) according to any one of the preceding claims, **characterized in that** the emission characteristic generated by the first region (10) is a directed light beam.

8. Vehicle light (3) according to any one of the preceding claims, **characterized in that** the emission characteristic generated by the second region (11) is a diffuse light emission.

9. Vehicle light (3) according to one of claims 4 to 8, **characterized in that** at least one of the surfaces (13) has a rough surface structure.

10. Vehicle light (3) according to any one of the preceding claims, **characterized in that** the light guide body (8) has the shape of a plate, a rod or a disc.

## Revendications

1. Luminaire de véhicule (3), plus particulièrement pour l'éclairage de l'habitacle (2) du véhicule (1) avec
- au moins deux sources de lumière (4, 5) et
- un corps de guidage de lumière (8) qui comprend au moins une première surface de couplage de lumière (6) pour le couplage de l'émission de lumière de la première source de lumière (4), une deuxième surface de couplage de lumière (7) pour le couplage de l'émission de lumière de la deuxième source de lumière (5) et une pluralité de structures de découplage de lumière (9) dans lesquelles la lumière couplée est réfléchie afin de sortir au niveau d'une surface de découplage de lumière (16) hors du corps de guidage de lumière (8),
**caractérisé en ce que**
- chaque structure de découplage de lumière (9) comprend une première zone (10) sur laquelle arrive, lorsque la première source de lumière (4) est activée, une partie de l'émission de lumière de cette première source de lumière (4) et une deuxième zone (11) sur laquelle arrive, lorsque la deuxième source de lumière (5), une partie de l'émission de lumière de cette deuxième source de lumière (5) et
- le découplage de lumière généré au moyen de la première zone (10) comprend une caractéristique d'émission différente du découplage de lumière généré au moyen de la deuxième zone (11).

2. Luminaire de véhicule (3), plus particulièrement pour l'éclairage de l'habitacle (2) du véhicule (1), avec
- au moins une source de lumière (4) et
- un corps de guidage de lumière (8), qui comprend au moins une première surface de couplage de lumière (6) pour le couplage de l'émission de lumière de l'au moins une source de lumière (4), une deuxième surface de couplage de lumière (7) pour le couplage de l'émission de lumière de l'au moins une source de lumière (4) et une pluralité de structures de découplage de lumière (9) dans lesquelles la lumière couplée est réfléchie afin de sortir au niveau d'une surface de découplage de lumière (16) hors du corps de guidage de lumière (8),
**caractérisé en ce que**
- chaque structure de découplage de lumière (9) comprend une première zone (10) sur laquelle arrive une partie de la lumière couplée par l'intermédiaire de la première surface de couplage de lumière (6) dans le corps de guidage de lumière (8), et une deuxième zone (11) sur laquelle arrive une partie de la lumière couplée par l'intermédiaire de la deuxième surface de couplage de lumière (7) dans le corps de guidage de lumière (8) et
- le découplage de lumière généré au moyen de la première zone (10) présente une caractéristique d'émission différente du découplage de lumière généré au moyen de la deuxième zone (11).

3. Luminaire de véhicule (3) selon la revendication 1 ou 2,
**caractérisé en ce que**
la structure de découplage de lumière (9) est une découpe ou une encoche.

4. Luminaire de véhicule (3) selon l'une des revendications précédentes,
**caractérisé en ce que**
les deux zones (10, 11) de la structure de découplage de lumière (9) sont deux surfaces (12, 13) qui forment un angle (17).

5. Luminaire de véhicule (3) selon la revendication 4,
**caractérisé en ce que**
au moins une des surfaces (12) est plane.

6. Luminaire de véhicule (3) selon la revendication 4ou 5,
**caractérisé en ce que**
au moins une des surfaces (13) est incurvée.

7. Luminaire de véhicule (3) selon l'une des revendications précédentes,
**caractérisé en ce que**
la caractéristique d'émission générée par la première zone (10) est un faisceau lumineux orienté.

8. Luminaire de véhicule (3) selon l'une des revendications précédentes,
**caractérisé en ce que**
la caractéristique d'émission générée par la deuxième zone (11) est une émission de lumière diffuse.

9. Luminaire de véhicule (3) selon l'une des revendications 4 à 8,
**caractérisé en ce que**
au moins une des surfaces (13) est une surface rugueuse.

10. Luminaire de véhicule (3) selon l'une des revendications précédentes,
**caractérisé en ce que**
le corps de guidage de lumière (8) présente la forme d'une plaque, d'une tige ou d'un disque.
